Europäisches Patentamt

(19) European Patent Office

Office européen des brevets

(11) Publication number: **0 237 872**
**A2**

## (12) EUROPEAN PATENT APPLICATION

(21) Application number: **87103104.3**

(22) Date of filing: **05.03.87**

(51) Int. Cl.⁴: **C08L 69/00** ,
   //(C08L69/00,67:02)

(30) Priority: **18.03.86 US 840776**

(43) Date of publication of application:
**23.09.87 Bulletin  87/39**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Miller, Kenneth Frederick**
**1612 Hawthorne Drive**
**Mt. Vernon Indiana 47620(US)**
Inventor: **DeRudder, James Louis**
**1622 Raintree Drive**
**Mt. Vernon Indiana 47620(US)**

(74) Representative: **Catherine, Alain et al**
**General Electric - Deutschland Munich**
**Patent Operation Frauenstrasse 32**
**D-8000 München 5(DE)**

(54) **Thermoplastic molding composition.**

(57) A composition comprising
   (a) an aromatic copolyestercarbonate having from about 65 to 95 weight percent ester bonds with from about 80 to 98 mole percent of the ester bonds isophthalate and about 2 to 20 mole percent of the ester bonds terephthalate, and
   (b) polyethylene terephthalate in quantities sufficient to significantly lower the processing temperature of the composition while significantly maintaining the thermal properties as measured by ASTM D-648.

EP 0 237 872 A2

## THERMOPLASTIC MOLDING COMPOSITION

## BACKGROUND OF THE INVENTION

Copolyestercarbonate resins are well known thermoplastic materials which, due to their many advantageous mechanical properties, are finding increasing use as thermoplastic engineering materials. The copolyestercarbonates exhibit, for example, excellent properties of toughness, flexibility, impact resistance, and relatively high heat resistance. The copolyestercarbonates may be prepared, inter alia, as described in U.S. Patent 3,169,121 by the coreaction of a dihydric phenol, a carbonate precursor, and at least one ester precursor such as a difunctional carboxylic acid or an ester forming reactive derivative thereof. A specific grouping of copolyestercarbonates having relatively high ester content and high isophthalate content are more resistant to stress crazing or cracking, U.S. Patent 4,465,820. These compositions also have very high temperature properties as measured by Distortion Temperature Under Load (DTUL) ASTM D 648 or a sag test at a specific temperature of a modified ASTM D3769-81.

However, due to their relatively high melt viscosities the copolyestercarbonate resins are generally somewhat difficult to process. It would be very advantageous if a copolyestercarbonate resin composition was available which was easier to process, but retained a substantial proportion of its high temperature properties while also maintaining a significant portion of its resistance to stress crazing and cracking.

## SUMMARY OF THE INVENTION

In accordance with the invention, there is a composition comprising

(a) an aromatic copolyestercarbonate having from about 65 to 95 weight percent ester bonds with from about 80 to 98 mole percent of the ester bonds being isophthalate and the remainder terephthalate and

(b) polyethylene terephthalate in quantities sufficient to significantly lower the processing temperature while significantly maintaining the thermal properties as measured by ASTM D638.

## DESCRIPTION OF THE INVENTION

It has been discovered that the addition of a polyethylene terephthalate to a specific copolyestercarbonate resin containing a relatively high ester content, the major portion of which is isophthalate, results in an admixture or blend which exhibits improved processability and improved thermal properties. The standard test for measuring the thermal properties is ASTM D648, however, ASTM D3769-81 is also an appropriate and sometimes more sensitive test system.

The copolyestercarbonates useful in this invention are described in Miller et al, U.S.P. 4,465,820, incorporated by reference into this application. The copolyestercarbonate is prepared by art recognized methods present in the noted patent.

The polyethylene terephthalate used in the blend is the standard polyethylene terephthalate available in commerce such as bottle scrap, Goodyear Cleartuf® 7207 or 8403, Kodak Kodapak® 9663, Tenite 7352, Vituf 6200, Rohm and Haas 5202A, 5822C and 5922C and the like. It may have an intrinsic·viscosity measured in dl/g at 30°C of about 0.4 to 1.3. The quantity of polyethylene terephthalate employed in the blend is that which significantly lowers the processing temperature of the copolyestercarbonate while still maintaining a substantial amount of the thermal properties. Generally from about 2 to about 40 weight percent of the polyethylene terephthalate can be employed. Weight percent polyethylene terephthalate is measured as percent of poly ethylene terephthalate plus copolyestercarbonate. A preferred amount of polyethylene terephthalate is about 4 to about 30 weight percent. The processing improvement contemplated and observed is a substantial reduction in extrusion and molding temperatures necessary to form an article. Examples of molding include injection, extrusion blow molding, compression blow molding, profile extrusion and the like.

Other materials may also be present in the admixture. For example, various additives such as flame retardants, hydrolytic stabilizers, ultra violet stabilizers and fillers and reinforcers such as glass, preferably in a fibrous form, talc, mica, other polymers and the like may be present in the composition. Because of the lower processing temperature, the scope of additional materials which can be processed together with the binary composition is substantially increased.

Of particular interest are polymeric materials having a second order transition temperature, Tg, of below about 0°C, preferably below about -30°C. Preferably the material will form a discontinuous phase with the copolyestercarbonate.

Examples of such polymeric material include non-rubbers such as the polyolefins, for example and rubbery materials which include, for example, the acrylates, methacrylates, alkadienes, styrenics, acrylonitriles, ethylene propylene dienes and the like. Examples of polyolefins include polyethylene, polypropylene, polybutene and the like and copolyolefins such as ethylene propylene, linear low density polyolefins with ethylene the primary monomer and butene-1, hexene-1 or octene-1, the comonomer. Copolymers including a monomer other than an olefin are also intended to be within the definition; for example, olefin acrylates such as ethylene ethyl acrylate available from Union Carbide as DPD6169. Examples of acrylates useful in the composition include the alkylacrylates wherein the alkyl is from about one to two carbon atoms, preferably n-butyl acrylate. The acrylates can be used alone or in combination with other monomers such as the aforementioned olefin acrylates. Further examples of acrylate copolymers include the acrylate-methacrylate currently represented by the core-shell polymers commercially avail able from Rohm and Haas. Generally, the polymerized alkacrylates can be used but preferably as copolymer with other monomers such as the aforementioned acrylates or as comonomers with an alkadiene such as butadiene. An example of such material is a core shell material with a butadiene core and a methylmethacrylate shell, available commercially from Rohm and Haas as Acryloid KM653. Examples of alkadienes include butadiene, isoprene, neoprene and other higher dienes. Copolymers using the alkadiene are also appropriate. Styrenics such as the Kraton series available from Shell, block copolymers of selectively hydrogenated styrene-butadiene-styrene as well as KR03 available from Phillips, styrene-butadiene-styrene, are also included. Acrylonitrile butadiene styrene (ABS) resins are also included. EPDM rubbers such as Epsyn 704 available from Copolymer Rubber are also included. The disclosure of various rubbers and olefins in U.S.P. 4,522,980 are hereby incorporated by reference.

At relatively low or moderate concentrations of materials with the requisite Tg, the compositions of copolyestercarbonate and polyethylene terephthalate are effectively impact modified. Quantities of material vary from about 2 to about 16 weight percent of the requisite Tg material. The weight percent is measured on the basis of copolyestercarbonate plus polyethylene terephthalate plus material with the requisite Tg. For impact modification it is preferred to have about 4 to about 12 weight percent of the material. Generally improved processing conditions are the major reason for utilizing more than 10 weight percent of the requisite Tg material. Thus, improved impact as well as improved processing conditions can exist concurrently at certain weight %. Generally above about 16% of the requisite Tg material, the improved processing conditions are the dominant reason for employing the requisite Tg material. Generally no more than about 25 weight percent of the requisite Tg material need be employed. The processing conditions which the increased quantity of Tg requisite material increase is the melt strength and shear sensitivity of the composition, thereby allowing improved processing in blow molding. Preferred quantities of Tg material which improve processing are from about 12 to about 20 weight percent.

Below are examples of the invention. These examples are intended to illustrate the invention, rather than narrow the broad, inventive concept of the specific examples.

## EXAMPLE 1

An aromatic copolyestercarbonate was prepared from bisphenol-A, terephthaloyl chloride, isophthaloyl chloride, and phosgene with p-tert butyl phenol by the interfacial technique of U.S.P. 4,465,820. The copolyestercarbonate had about 80 weight percent ester bonds, 7 percent terephthalate and 93 percent isophthalate and was used in the following experiments. Various weight percentages of aliphatic polyesters are combined with the copolyestercarbonate. The thermal properties as measured as DTUL °C in accordance with ASTM D 648 were then obtained. The higher the ASTM measurement the better the heat resistance of the composition. The KI is a measurement of the melt viscosity of the composi tion and is measured in the manner disclosed in U.S.P. 4,465,820. The larger the KI the more viscous the material. The compositions were extruded at about 560°F and molded at 600-650°F into izod bars of the dimensions 2 1/2" x 1/2" x 1/8". The results are below:

TABLE 1

| POLYESTER WT.% | DTUL °C | | HYTREL | GAFLEX |
| | PET[1] | PBT[2] | 5556[3] | 5472[4] |
| --- | --- | --- | --- | --- |
| 2 | 159.9 | 155.3 | --- | --- |
| 5 | 153.5 | 148.7 | 136.4 | 138.7 |
| 10 | 148.8 | 133.3 | 112.5 | 126.3 |
| 20 | 141.0 | 113.9 | 99.5 | 107.7 |
| 40 | 122.7 | --- | --- | --- |

| POLYESTER WT.% | KI | | HYTREL | GAFLEX |
| | PET[1] | PBT[2] | 5556[3] | 5472[4] |
| --- | --- | --- | --- | --- |
| 2 | 27910 | 29015 | --- | --- |
| 5 | 19850 | 22490 | 15560 | 20200 |
| 10 | 12040 | 15770 | 9870 | 14420 |
| 20 | 8190 | 6870 | 5960 | 9250 |
| 40 | 5630 | --- | --- | --- |

[1]Tenite 7352 obtained from Eastman Kodak.

[2]VALOX® polybutylene terephthalate from General Electric.

[3]Commercial polyetherester available from DuPont.

[4]Commercial polyesterester available from GAF.

As is readily observed, the addition of the various polyesters to the aromatic copolyestercarbonate brought about a significant reduction in melt viscosity and thereby enhanced processability. However, all the polyesters other than polyethylene terephthalate significantly reduce the thermal resistance of the composition. Only polyethylene terephthalate significantly maintained the thermal resistance of the composition while enhancing its processability.

EXAMPLE 2

An aromatic copolyestercarbonate having about 72 weight percent ester with an 85% terephthalate and 15% isophthalate concentration was prepared as in Example 1. The copolyester carbonate of Example 1 was also used. To each of these copolyestercarbonates was added specific quantities of polyethylene terephthalate. Distortion Temperature Under Load (DTUL) tests were run in accordance with ASTM D 648 on compositions extruded at 570°F and molded at 650°F into Izod bars of dimensions 2 1/2" x 1/2" x 1/8". Below are the results:

## TABLE 2

| WT.% PET[1] | DTUL °C COPOLY-ESTERCARBONATE | | CHANGE IN °C FROM 0 PET | |
|---|---|---|---|---|
| | HIGH TERE | HIGH ISO | HIGH TERE | HIGH ISO |
| 0 | 163.0 | 160.2 | -- | -- |
| 2 | 158.0 | 155.1 | 5.0 | 5.1 |
| 10 | 144.5 | 143.9 | 8.5 | 6.3 |
| 25 | 118.8 | 122.5 | 44.2 | 37.5 |

[1]Vituf 6200 obtained from Goodyear.

It is clear that the high isophthalate concentration aromatic copolyestercarbonate exhibits smaller loss in thermal resistance than the copolyestercarbonate having essentially the same ester content but a substantially higher terephthalate content.

## EXAMPLE 3

A further measure showing the unexpected superiority of polyethylene terephthalate over other polyesters, specifically polybutylene terephthalate, is shown in the S-tensile impact test, ASTM D1822 on polyethylene terephthalate containing low terephthalate copolyestercarbonate compositions of Example 1. Below are the results:

## TABLE 3

| % POLYESTER | S-TENSILE IMPACT ($ft.lb/in^2$) |
|---|---|
| 2 PBT | 322 |
| 2 PET | 317 |
| 5 PBT | 300 |
| 5 PET | 342 |
| 10 PBT | 161 |
| 10 PET | 238 |
| 20 PBT | 190 |
| 20 PET | 253 |

Clearly, the polyethylene terephthalate is more effective than the polybutylene terephthalate in maintaining impact resistance in this test system.

## EXAMPLE 4

Aromatic copolyestercarbonates were prepared as in Examples 1 and 2, the first copolyestercarbonate having 80 weight percent ester which was 93% isophthalate, 7% terephthalate. The second copolyestercarbonate was 72 weight percent ester which was 85% terephthalate and 15% isophthalate. Various weight percents of polyethylene terephthalate (Vituf) were extruded and molded into Izod bars as in Example 2. When the Izod bars of both the high isophthalate and high terephthalate copolyestercarbonate blends containing 25% polyethylene terephthalate are immersed in Amoco premium unleaded gasoline, no environmental cracking is observed after 12 hours. However, when the bars are mounted on strain jigs designed for 1000, 2000 or 3400 psi stress for polycarbonate the blend of 25% polyethylene terephthalate with high terephthalate content copolyestercarbonate broke in two on the jig within 5 minutes. The high isophthalate copolyestercarbonate blend with 25% polyethylene terephthalate develops crazes but does not break after a minimum exposure of 8 hours. This test illustrates the superior resistance polyethylene terephthalate blends with high levels of isophthalate in the copolyestercarbonate exhibit with respect to similar blends with high levels of terephthalate containing copolyestercarbonates.

EXAMPLE 5

The better thermal property maintaining characteristics are demonstrated for polyethylene terephthalate when rubbery substances are also present in the formulation. The formulation composition used for the experiments below was the following:

| COMPONENT | WT. % |
|---|---|
| Polyester | 20-21 |
| Example 1 copolyestercarbonate | 69-70 |
| Acryloid KM 330[a] | 6.6 |
| Branched polycarbonate [b] | 2 |
| Additives | 0.5-1.3 |

[a]Core shell rubber with graft and cross linkers and about 80% n-butylacrylate and 20% methylmethacrylate, available from Rohm and Haas.

[b]LEXAN® polycarbonate resin 155.

### TABLE 4

| POLYESTER | M.P. POLY-ESTER °C | DTUL °F | SAG[c] 310°F (mm) |
|---|---|---|---|
| Lomod J-50[a] | 220 | 228 | >128 |
| PCT[b] | 292 | 266 | 112 |
| PET | 250 | 278 | 27 |

[a]Polyetherester available from General Electric Co. [b]Polycyclohexane dimethanol terephthalate available as Eastman PCT-3879.
[c]Sag is performed as ASTM D-3769-81 with modifications as follows:
  (1) Sample dimension -1/2" x 7" x 1/8".
  (2) Sample overhang -6 inches.
  (3) Exposure time -30 minutes.

It is readily observed that polyethylene terephthalate is superior to other polyesters for maintaining thermal resistance even in comparison with higher melting point polyesters. With respect to the property being measured, the sag test system appears to be a more sensitive measurement than DTUL.

EXAMPLE 6

The same composition as in Example 5 was employed except that KM 653, a core shell rubber having a butadiene core available from Rohm and Haas was used in place of KM 330 and the polyester remained polyethylene terephthalate.

| RUBBER | DTUL °F | SAG AT 310°F (mm) |
|--------|---------|-------------------|
| KM 330 | 278 | 27 |
| KM 653 | 274 | 30 |

The use of a different rubber does not affect the thermal resistance properties significantly.

EXAMPLE 7

The same formulation as in Example 5 was used except that polyethylene terephthalate was used throughout. The KM 330 content was increased by reducing the amount of copolyestercarbonate. Below are the results when increased rubber is present.

| WT. % KM 330 | DTUL °F | SAG AT 310°F (mm) |
|--------------|---------|-------------------|
| 6.6 | 278 | 27 |
| 15.0 | 284 | 2 |

The increased quantity of rubbery material increases the thermal resistance in both test systems.

**Claims**

1. A composition comprising

(a) an aromatic copolyestercarbonate having from about 65 to 95 weight percent ester bonds with from about 80 to 98 mole percent of the ester bonds isophthalate and about 2 to 20 mole percent of the ester bonds terephthalate, and

(b) polyethylene terephthalate in quantities sufficient to significantly lower the processing temperature of the composition while significantly maintaining the thermal properties as measured by ASTM D-648.

2. The composition in accordance with claim 1 wherein the weight percent of polyethylene terephthalate is from about 2 to 40.

3. The composition in accordance with claim 2 wherein the weight percent of polyethylene terephthalate is from about 4 to 30.

4. The composition in accordance with claim 1 wherein at least one further polymer is present in the composition, said polymer having a second order transition temperature, $T_g$, of below about 0°C.

5. The composition in accordance with claim 4 wherein the $T_g$ is below about -30°C.

6. The composition in accordance with claim 5 wherein the additional polymer is present in impact modifying quantities.

7. The composition in accordance with claim 6 wherein the quantities are from about 2 to 16 weight percent of the aromatic copolyestercarbonate plus PET plus requisite $T_g$ material.

8. The composition in accordance with claim 5 wherein the additional polymer is present in process affecting quantities.

9. The composition in accordance with claim 8 wherein the quantities are from about 10 to 25 weight percent.

10. The composition in accordance with claim 5 wherein the requisite material is selected from the group consisting of polyolefins, acrylates, alkacrylates, alkadienes, styrenics and EPDM rubbers and copolymers of any of the above polymers.

11. The composition in accordance with claim 10 wherein the material is a polyolefin.

12. The composition in accordance with claim 10 wherein the material is an acrylate.